# EUROPÄISCHE PATENTANMELDUNG

(11) **EP 3 244 087 A1**
(43) Veröffentlichungstag der Anmeldung: **15.11.2017**
(21) Anmeldenummer: 16168958.3
(22) Anmeldetag: 10.05.2016
(51) Int. Cl.: F16F 1/04

(54) **VERFAHREN UND VORRICHTUNG ZUM WARMSPANNEN VON EINER FEDER**

(71) Anmelder: Baumann Federn AG, 8734 Ermenswil (CH)
(72) Erfinder: HOHL, Andreas, 8630 Rüti (CH)
(74) Vertreter: Troesch Scheidegger Werner AG

(57) **Zusammenfassung**

Die Erfindung betrifft ein Verfahren zum Warmspannen von wenigstens einer Feder (12). Das Verfahren umfasst die Schritte: a) Spannen der Feder (12) auf eine vorbestimmte Länge, b) induktives Erwärmen der gespannten Feder (12) auf eine vorbestimmte Temperatur innerhalb einer vorbestimmten Zeitdauer mittels elektromagnetischer Induktion, und d) Abkühlen und Entspannen der Feder (12) in beliebiger Reihenfolge.

## Beschreibung

Die vorliegende Erfindung betrifft ein Verfahren und eine Vorrichtung zum Warmspannen von einer Feder.

Ein bekanntes Verfahren bei der Herstellung von Federn betrifft das Warmspannen. Hierbei wird die Feder auf eine bestimmte Länge, häufig auf Blocklänge, gespannt. Unter Blocklänge wird die Länge einer Feder bezeichnet, welche so weit komprimiert ist, dass Windung auf Windung aufliegt und keinen Zwischenraum mehr zwischen den Windungen aufweist. In der bestimmten Länge wird die Feder mittels einer Vorrichtung gehalten. Anschliessend wird die gesamte Einheit, d.h. Feder und Vorrichtung, in einem Ofen auf eine vorbestimmte Temperatur erwärmt und für eine bestimmte, in der Regel längere Zeit auf Temperatur gehalten, abgekühlt und anschliessend entspannt.

Nachteile beim Warmspannen sind ein grosser Aufwand in Bezug auf die Spannvorrichtungen, ein grosser Energieaufwand für das Erwärmen von Feder und Spannvorrichtung, eine lange Prozessdauer und eine schlechte Automatisierbarkeit des Verfahrens.

Die Aufgabe der vorliegenden Erfindung besteht darin, ein Verfahren und eine Vorrichtung zum Warmspannen von einer Feder anzugeben, welche die vorstehend genannten Nachteile nicht aufweisen.

Diese Aufgabe wird durch ein Verfahren zum Warmspannen von einer Feder mit den Merkmalen gemäss Anspruch 1 gelöst. Vorteilhafte Ausführungsformen sind in weiteren Ansprüchen angegeben.

Erfindungsgemäss umfasst ein Verfahren zum Warmspannen von wenigstens einer Feder die Schritte: a) Spannen der Feder auf eine vorbestimmte Länge, b) induktives Erwärmen der gespannten Feder auf eine vorbestimmte Temperatur innerhalb einer vorbestimmten Zeitdauer mittels elektromagnetischer Induktion, und d) Abkühlen und Entspannen der Feder in beliebiger Reihenfolge.

Ein Vorteil des erfindungsgemässen Verfahrens liegt im geringeren Aufwand in Bezug auf die Spannvorrichtung. Ebenso ist der Energieaufwand für das Erwärmen von Feder und Spannvorrichtung reduziert. Ferner sind die Prozessdauer verkürzt und die Automatisierbarkeit des Verfahrens verbessert. Bei dem vorgestellten Verfahren wird das Warmspannen mit dem Prozess der induktiven Erwärmung kombiniert. Unter dem Wortlaut "vorbestimmte Länge" im Zusammenhang mit dem Spannen der Feder ist eine Länge in einem Bereich zwischen einer (jeglichen) freien Länge und der Blocklänge der Feder zu verstehen.

In einer Ausführungsform umfasst das Verfahren ferner den Schritt: c) Halten der gespannten Feder auf der Länge im Erwärmungsprozess innerhalb einer vorbestimmten Zeitdauer.

In einer alternativen Ausführungsform umfasst das Verfahren ferner die Schritte: c1) Strecken oder Stauchen der Feder nach der induktiven Erwärmung auf eine veränderte Länge, und c2) Halten der Feder auf der veränderten Länge innerhalb einer vorbestimmten Zeitdauer.

In einer Ausführungsform umfasst der Schritt d) die Schritte: d1) Abkühlen der Feder im gespannten Zustand auf Umgebungstemperatur, und d2) Entspannen der Feder.

In einer alternativen Ausführungsform umfasst der Schritt d) die Schritte: d1) Entspannen der Feder im erwärmten Zustand, und d2) Abkühlen der Feder im entspannten Zustand auf Umgebungstemperatur.

In einer Ausführungsform ist die vorbestimmte Länge gleich einer Blocklänge der Feder.

In einer Ausführungsform wird die Feder durch eine Induktionseinrichtung erwärmt, welche eine Spule umfasst, wobei die Spule und Feder relativ zueinander in Längsrichtung derart bewegt werden, dass die Feder wenigstens abschnittsweise erwärmt wird. Die Feder kann durch eine kürzere Spule der Induktionseinrichtung zuverlässig erwärmt werden, indem Feder und Spule in Relation zueinander linear bewegt werden. Die Spule der Induktionseinrichtung kann eine Induktionsspule mit mindestens einer Windung sein.

In einer Ausführungsform wird die Feder wenigstens im Verlaufe der Erwärmung innerhalb einer vorbestimmten Zeitdauer um ihre Längsachse rotiert. Somit wird die Feder auf einfache und zuverlässige Art und Weise gleichmässig erwärmt. Der Energieaufwand hierzu ist sehr gering gehalten.

Eine erfindungsgemässe Vorrichtung zum Warmspannen von wenigstens einer Feder durch ein Verfahren nach einem der Ansprüche 1 bis 8 umfasst eine Induktionseinrichtung zum Erwärmen der Feder mittels elektromagnetischer Induktion auf eine vorbestimmte Temperatur.

In einer Ausführungsform umfasst die Induktionseinrichtung eine Spule mit einer Mehrzahl von Windungen.

In einer Ausführungsform umfasst die Vorrichtung ferner eine Lagereinrichtung zum Lagern der Feder innerhalb der Windungen der Spule in Axialrichtung, wobei die Lagereinrichtung ausgebildet ist, die Feder in Axialrichtung zu bewegen und/oder um ihre Achse zu rotieren. Somit wird die Feder über ihre Länge hinweg umfänglich und gleichmässig erwärmt.

In einer Ausführungsform der Vorrichtung ist die Länge der Spule kürzer als die Länge der zu erwärmenden Feder, wobei die Lagereinrichtung eine Bewegungseinrichtung zum Bewegen der Spule und Feder in Relation zueinander in Längsrichtung umfasst. Durch lineares Verstellen der Feder und Spule in Relation zueinander kann die Feder gleichmässig erwärmt werden. Auch können Federn unterschiedlicher Längen erwärmt werden.

In einer alternativen Ausführungsform der Vorrichtung ist die Länge der Spule wenigstens gleich lang wie die Länge der zu erwärmenden Feder, wobei die Lagereinrichtung eine Halteeinrichtung zum in Längsrichtung fixierten Halten der Spule und Feder in Relation zueinander umfasst.

In einer Ausführungsform der Vorrichtung operiert die Induktionseinrichtung im Mittel- oder Hochfrequenzbereich. Somit ist eine zuverlässige Erwärmung der Feder ermöglicht.

Es wird ausdrücklich darauf hingewiesen, dass die vorstehenden Ausführungsformen beliebig kombinierbar sind. Lediglich diejenigen Kombinationen von Ausführungsformen sind ausgeschlossen, die durch die Kombination zu Widersprüchen führen würden.

Im Folgenden wird die vorliegende Erfindung anhand von einem in der Zeichnung dargestellten Ausführungsbeispiel weiter erläutert. Dabei zeigt:

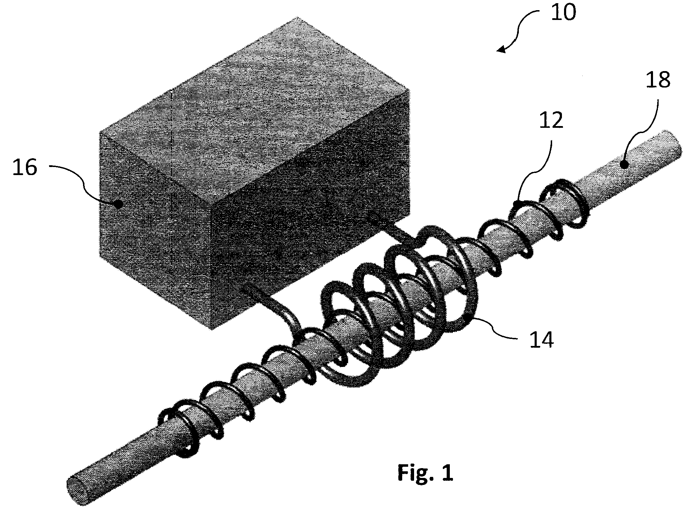

- Fig. 1: eine schematische Ansicht von einer Induktionseinrichtung.

Fig. 1 zeigt eine schematische Ansicht von einer Induktionseinrichtung 10 zum Warmspannen von einer Feder 12 auf eine vorbestimmte Warmsetztemperatur mittels elektromagnetischer Induktion. Die Induktionseinrichtung 10 umfasst eine Spule 14 mit vier Windungen, durch welche ein von einer Stromversorgung 16 zugeführter Strom fliesst. Die Feder 12 ist innerhalb der Windungen der Spule 14 in deren Axialrichtung angeordnet und durch eine Lagereinrichtung 18 gelagert. Hierbei ist die Feder 12 auf die Lagereinrichtung 18 aufgesteckt. Die Lagereinrichtung 18 kann die Feder 12 in Axialrichtung bewegen und/oder um ihre Achse rotieren. Die Lagereinrichtung kann, wie in der Figur 1 gezeigt, ein Dorn sein, welcher die Feder 12 am Innendurchmesser führt. Die Feder 12 kann aber auch mit einer Hülse (nicht gezeigt) geführt werden, wobei in diesem Beispiel die Feder in der Hülse am Aussendurchmesser geführt wird. Weiter alternativ kann die Feder zwischen zwei parallelen Platten an den beiden Enden geführt sein.

In der gezeigten Ausführungsform ist die Spule 14 kürzer als die zu erwärmende Feder 12. Zur gleichmässigen Erwärmung kann die Lagereinrichtung 18 mittels einer Bewegungseinrichtung (nicht gezeigt) in Relation zur fixierten Spule 14 in Axialrichtung bewegt werden. Alternativ kann die Spule 14 in Relation zur gehaltenen Feder 12 in Axialrichtung bewegt werden. Obwohl nicht gezeigt, kann die Spule 14 wenigstens die gleiche Länge der zu erwärmenden Feder 12 haben. Die Induktionseinrichtung 10 kann im Mittel- oder Hochfrequenzbereich operieren.

In einem Verfahren zum Warmspannen der Feder 12 wird diese in einem gespannten Zustand bei einer vorbestimmten Länge, z.B. eine Blocklänge, induktiv erwärmt. Anschliessend kann die Feder 12 innerhalb einer vorbestimmten Zeitdauer auf der vorbestimmten Länge oder eine weitere Länge gehalten werden. Hiernach kann die Feder 12 abgekühlt und nachfolgend entspannt werden. Alternativ kann die Feder 12 zunächst entspannt und nachfolgend im entspannten Zustand abgekühlt werden.

Das Warmspannen der Feder 12 wird mit induktiver Erwärmung kombiniert. Somit kann die Feder 12 derart temperiert werden, dass hohe Anforderungen hinsichtlich der Qualität der resultierenden Feder 12 erfüllt werden. Die Feder 12 wird z.B. durch eine Setzvorrichtung (nicht gezeigt) auf eine definierte Länge gespannt und im gespannten Zustand mittels Induktion, welche durch den durch die Spule 14 fliessenden Strom und die Feder 12 selber hervorgerufen wird, auf die vorbestimmte Temperatur erwärmt. Anschliessend kann die Feder 12 über eine kurze Zeitdauer unverändert gehalten werden. Alternativ kann die Feder 12 im erwärmten Zustand gestreckt und/oder gestaucht werden. Hieran anschliessend kann die Feder 12 zuerst mit einem Medium abgekühlt und anschliessend entspannt werden. Alternativ kann die Feder 12 zuerst entspannt und anschliessend abgekühlt werden.

## Patentansprüche

1. Verfahren zum Warmspannen von wenigstens einer Feder (12), umfassend die Schritte:
a) Spannen der Feder (12) auf eine vorbestimmte Länge,
b) induktives Erwärmen der gespannten Feder (12) auf eine vorbestimmte Temperatur innerhalb einer vorbestimmten Zeitdauer mittels elektromagnetischer Induktion, und
d) Abkühlen und Entspannen der Feder (12) in beliebiger Reihenfolge.

2. Verfahren nach Anspruch 1, ferner umfassend den Schritt:
c) Halten der gespannten Feder (12) auf der Länge im Erwärmungsprozess innerhalb einer vorbestimmten Zeitdauer.

3. Verfahren nach Anspruch 1, ferner umfassend die Schritte:
c1) Strecken oder Stauchen der Feder (12) nach der induktiven Erwärmung auf eine veränderte Länge, und
c2) Halten der Feder (12) auf der veränderten Länge innerhalb einer vorbestimmten Zeitdauer.

4. Verfahren nach einem der vorhergehenden Ansprüche, wobei der Schritt d) die Schritte umfasst:
d1) Abkühlen der Feder (12) im gespannten Zustand auf Umgebungstemperatur, und
d2) Entspannen der Feder (12).

5. Verfahren nach einem der Ansprüche 1 bis 3, wobei der Schritt d) die Schritte umfasst:
d1) Entspannen der Feder (12) im erwärmten Zustand, und
d2) Abkühlen der Feder (12) im entspannten Zustand auf Umgebungstemperatur.

6. Verfahren nach einem der vorhergehenden Ansprüche, wobei die vorbestimmte Länge gleich einer Blocklänge der Feder (12) ist.

7. Verfahren nach einem der vorhergehenden Ansprüche, bei welchem die Feder (12) durch eine Induktionseinrichtung (10) erwärmt wird, welche eine Spule (14) umfasst, wobei die Spule (14) und Feder (12) relativ zueinander in Längsrichtung derart bewegt werden, dass die Feder (12) wenigstens abschnittsweise erwärmt wird.

8. Verfahren nach einem der vorhergehenden Ansprüche, bei welchem die Feder (12) wenigstens im Verlaufe der Erwärmung innerhalb einer vorbestimmten Zeitdauer um ihre Längsachse rotiert wird.

9. Vorrichtung zum Warmspannen von wenigstens einer Feder (12) durch ein Verfahren nach einem der vorhergehenden Ansprüche, wobei die Vorrichtung umfasst:
eine Induktionseinrichtung (10) zum Erwärmen der Feder (12) mittels elektromagnetischer Induktion auf eine vorbestimmte Temperatur.

10. Vorrichtung nach Anspruch 9, wobei die Induktionseinrichtung (10) eine Spule (14) mit einer Mehrzahl von Windungen umfasst.

11. Vorrichtung nach Anspruch 10, ferner umfassend eine Lagereinrichtung (18) zum Lagern der Feder (12) innerhalb der Windungen der Spule (14) in Axialrichtung, wobei die Lagereinrichtung (18) ausgebildet ist, die Feder (12) in Axialrichtung zu bewegen und/oder um ihre Achse zu rotieren.

12. Vorrichtung nach Anspruch 10 oder 11, bei welcher die Länge der Spule (14) kürzer ist als die Länge der zu erwärmenden Feder (12), wobei die Lagereinrichtung (18) eine Bewegungseinrichtung zum Bewegen der Spule (14) und Feder (12) in Relation zueinander in Längsrichtung umfasst.

13. Vorrichtung nach Anspruch 10 oder 11, bei welcher die Länge der Spule (14) wenigstens gleich lang ist wie die Länge der zu erwärmenden Feder (12), wobei die Lagereinrichtung (18) eine Halteeinrichtung zum in Längsrichtung fixierten Halten der Spule (14) und Feder (12) in Relation zueinander umfasst.

14. Vorrichtung nach einem der Ansprüche 9 bis 13, wobei die Induktionseinrichtung im Mittel- oder Hochfrequenzbereich operiert.
